# EUROPÄISCHE PATENTANMELDUNG

(11) **EP 1 008 820 A1**
(43) Veröffentlichungstag der Anmeldung: **14.06.2000**
(21) Anmeldenummer: 98811208.2
(22) Anmeldetag: 07.12.1998
(51) Int. Cl.: F24J 2/14, F24J 2/20

(54) **Sonnenkollektorelement**

(71) Anmelder: Roth, Max, 7310 Bad-Ragaz (CH)
(72) Erfinder: Roth, Max, 7310 Bad-Ragaz (CH)
(74) Vertreter: Riederer, Conrad A., Dr.

(57) **Zusammenfassung**

Ein von einem Wärmetransportmedium durchströmbares Sonnenkollektorelement (11) weist die Form eines rinnenfömigen Kissenkollektors auf, wobei die konkave Seite (25) des Kollektorkörpers (13) der Strahlungsquelle zugewandt ist. Die konkave Kollektorfläche (25) wird vor Verformungen infolge eines gegenüber dem Umgebungsdruck höheren Innendrucks durch Klammern (17) in Form gehalten. Die Enden sind mit einem Endstück (15), welches den Übergang zu Anschlussleitungen (19) bildet, verschlossen. Das Element (11) kann einzeln oder in Gruppen mit einer isolierenden Hülle umschlossen sein. Bei einem Bausatz sind die Anschlussleitungen (19) mit Vorlauf bzw. Rücklauf mittels Schnell-Kupplungsstücken verbindbar, so dass das Montieren und Demontieren sehr rasch möglich ist. Der Bausatz kann daher bei mobilen Einrichtungen verwendet werden. Durch die schlanke Form der Sonnenkollektorelemente (11) und ihre fast beliebige Kombinierbarkeit können sie auch als architektonische Gestaltungselemente Verwendung finden.

## Beschreibung

### Technisches Gebiet der Erfindung

Die Erfindung betrifft ein von einem Wärmetransportmedium durchfliessbares Sonnenkollektorelement mit einem Kollektorkörper einer bestimmbaren Länge und Breite, mit einer aussenseitigen Kollektorfläche zum Auffangen von Wärmeenergie aus der Sonnenstrahlung und einer Innenseite der Kollektorfläche zum praktisch vollflächigen Übertragen der aus der Sonnenstrahlung gewonnenen Wärmeenergie an das Wärmetransportmedium, und zum Anschliessen an eine Vorlaufleitung und eine Rücklaufleitung, und zum Einbau in eine einstrahlungsseitig für Sonnenstrahlung durchlässige, wärmeisolierende Hülle.

### Stand der Technik

Derartige Kollektorelemente sind als Kissenkollektoren bekannt. Die Kollektorkörper von Kissenkollektoren werden oft aus Edelstahl gefertigt, damit die beiden den Durchflussraum begrenzenden Bleche in bestimmten Abständen z.B. durch Punktschweissen verbunden werden können. Sie weisen sich durch einen ausgesprochen direkten Übergang der Wärme vom Kollektorkörper in das Wärmetransportmedium aus. Sie werden mit oder ohne Abdeckung verwendet und als ebenflächige Elemente mit möglichst grosser Fläche, d.h. möglichst grosser Länge und Breite hergestellt.

Es gibt unter anderem auch Kollektoren mit konkaven Reflektoren, welche die Globalstrahlung auf ein im Brennpunkt des Reflektors angeordnetes, Wärmetransportmedium führendes Rohr lenken.

Jeder Kollektortyp hat seine eigenen Charakteristiken mit typischen Vor- und Nachteilen je nach Standort, Ausrichtung und Verwendung.

### Aufgabe der Erfindung

Es ist Aufgabe der Erfindung, ein möglichst vielseitig verwendbares Sonnenkollektorelement als Kissenkollektor zu schaffen, welches je nach Standort, Ausrichtung und Zweck zu unterschiedlichen Kollektorregistern zusammengestellt und individuell nach der Einstrahlungsrichtung ausgerichtet werden kann. Das Sonnenkollektorelement soll insbesondere in einem grossen Spektrum von Einstrahlungswinkeln möglichst grosse Kollektorflächen mit nahezu senkrechter Einstrahlung aufweisen. Es soll aus Kupfer gefertigt werden können.

### Beschreibung der Erfindung

Bei einem Sonnenkollektorelement der eingangs beschriebenen Gattung wird dies erfindungsgemäss durch eine in einer Richtung gewölbte Kollektorfläche erreicht, wobei die Wölbung der Kollektorfläche aussenseitigen konkav ist. Beschreibt die Wölbung einen Drittel Kreisumfang werden über ca. 120 Grad der Sonneneinstrahlungsrichtung auf einem bis zwei Dritteln der Kollektorfläche Einstrahlungswinkel zwischen 50 und 90 Grad erreicht. Da die diese Kollektorfläche bildende Wandung direkt in Berührung mit dem Wärmetransportmedium steht, ist der Abtransport der Wärme optimal. Dank der Wölbung ist eine höhere Druckresistenz gewährleistet als bei flachen Kissenkollektoren.

Vorteilhaft weist die Kollektorfläche in Durchflussrichtung eine wesentlich grössere Abmessung auf als quer dazu. Durch die geringe Breite des Sonnenkollektorelements kann ein Kissen aus einem Kupferblech gefertigt werden, da lediglich am Rand Verbindungen notwendig sind. Diese rinnenförmigen Sonnenkollektorelemente sind beliebig zu Registern zusammenfassbar. Sie können seriell oder parallel angeordnet werden und daher an jede Abmessung des Untergrunds angepasst werden. Dabei ist zweckmässigerweise die Wölbung quer zur Durchflussrichtung ausgebildet, so dass die Kollektorfläche eine rinnenartige Form aufweist. Denn dadurch lässt sich das Sonnenkollektorelement durch Drehen um seine Längsachse nach der Haupteinstrahlungsrichtung ausrichten. Daher kann ein Register von Sonnenkollektorelementen ebenflächig auf einer nicht optimal positionierte Fläche angeordnet werden, und die Ausrichtung der Kollektorflächen ist dennoch optimierbar.

Vorteilhaft ist der Kollektorkörper aus einem Rohr geformt. Dadurch kann ein Verbinden von zwei Wandungselementen vermieden werden. Zweckmässigerweise ist die Wandung des Rohrs dazu entlang zwei parallelen, geraden Linien gefalzt. Dabei sind in der Wandung zwischen den zwei Falzungen zwei etwa parallele Wölbungen ausgeformt. Diese umschliessen den Durchflussraum und bilden eine wärmeleitende, konvexe Kollektorfläche geringer Breite und beliebiger Länge. Die geringe Breite von vorzugsweise 10 bis 15 cm ermöglicht eine flache Anordnung, selbst wenn die Elemente eines Registers um 30 bis 40 Grad gegenüber der Registerebene abgedreht sind.

Vorteilhaft ist ein verstärkender, abgekanteter Rand entlang der geradlinigen Falzungen vorgesehen, welcher durch eine doppelte Lage der an die Falzung angrenzenden Wandung gebildet ist. Dieser Rand bildet eine Strebe zwischen Fixationspunkten, so dass das rinnenartige Sonnenkollektorelement zwischen seine Form stabilisierenden Fixationspunkten in dieser Form gehalten ist.

Vorteilhaft sind Verstärkungselemente vorgesehen, welche in bestimmbaren Abständen angeordnet sind und die Ränder der konvex gewölbten Kollektorfläche zusammenbinden. Diese schaffen dadurch oben erwähnte Fixationspunkte. Diese Verstärkungselemente können Teil einer Hülle sein, können hinten um das Sonnenkollektorelement herumgeführt sein oder auch vorne die Wölbung direkt überspannen. Alternativ sind die Verstärkungselemente in bestimmbaren Abständen angeordnet und stützen die konvexe Wölbung der Kollektorfläche gegen einen erhöhten Innendruck eines das Sonnenkollektorelement füllenden Mediums. Sie liegen daher vorteilhaft auf der einstrahlungsseitigen Wölbung der Kollektorfläche an.

Vorteilhaft sind die in Durchflussrichtung vorliegenden Enden des Kollektorkörpers mit Endstücken verschlossen, welche je wenigstens einen Rohranschluss aufweisen. Diese Endstücke sind einfach zu montieren und so zu gestalten, dass ein einwandfreier Übergang zwischen den Endstücken und anzuschliessenden Anschlussrohren herstellbar ist.

Zweckmässigerweise werden mehrere erfindungsgemässe Sonnenkollektorelemente zur Bildung von eines Sonnenkollektors mit horizontal oder steigend verlaufenden, nach der Hauptsonnenscheinrichtung ausgerichteten Kollektorflächen verwendet. Solche Sonnenkollektoren bestehen aus seriell und/oder parallel zusammengeschlossenen Sonnenkollektorelementen. Dabei sind die Kollektorelemente insbesondere in der Falllinie auf einem geneigten Dach, vertikal in einer Fassade oder horizontal auf einer geneigten, vertikalen oder horizontalen Fläche angeordnet. Solche Register von Sonnenkollektorelementen können aus einzeln oder gemeinsam umhüllten Elementen bestehen. diese Endstücke dienen ebenfalls als Verstärkungselemente.

Vorteilhaft werden die Sonnenkollektorelemente als architektonische Gestaltungselemente in einer Fassade oder einer gestalteten Umgebung verwendet. Die schlanke Form der Elemente ermöglicht eine sehr vielseitige Verwendung.

Bei einem Bausatz mit erfindungsgemässen Sonnenkollektorelementen und je einer Vorlaufleitung und einer Rücklaufleitung sind diese zum wiederholten raschen Zusammenbau bzw. zur wiederholten raschen Demontage vorteilhaft mit einander entsprechenden Anschlusselementen versehen sind. Diese sind zweckmässigerweise miteinander verschraubbar oder in der Art eines Bajonettverschlusses verbindbar. Dadurch lässt sich ein Register von Sonnenkollektorelementen innert kürzester Zeit zusammenstellen und anschliessen, bzw. wieder auseinandernehmen und mit geringem Platzbedarf verstauen. Ein solcher Bausatz eignet sich insbesondere für Wohnmobile und Wohnwagen, und für den Einsatz in Zeltstädten und anderen notfallmässig errichteten Unterkünften.

### Kurzbeschrieb der Figuren

Es zeigt:
- Fig. 1: eine Aufsicht auf ein Sonnenkollektorelement,
- Fig. 2: einen Schnitt durch das Sonnenkollektorelement gemäss Figur 1, mit Pfeilen zur Erläuterung der Sonneneinstrahlung,
- Fig. 3: einen schematischen Querschnitt durch ein mit einer Glasscheibe abgedeckten Sonnenkollektorelements, mit Reflexionen der Einstrahlung,
- Fig. 4: eine schematische Darstellung einer Anordnung von Sonnenkollektorelementen an einer nach Südwesten ausgerichteten Dachfläche,
- Fig. 5: eine schematische Darstellung einer Anordnung von Sonnenkollektorelementen an einer vertikalen Wand.

### Beschrieb der Ausführungsbeispiele

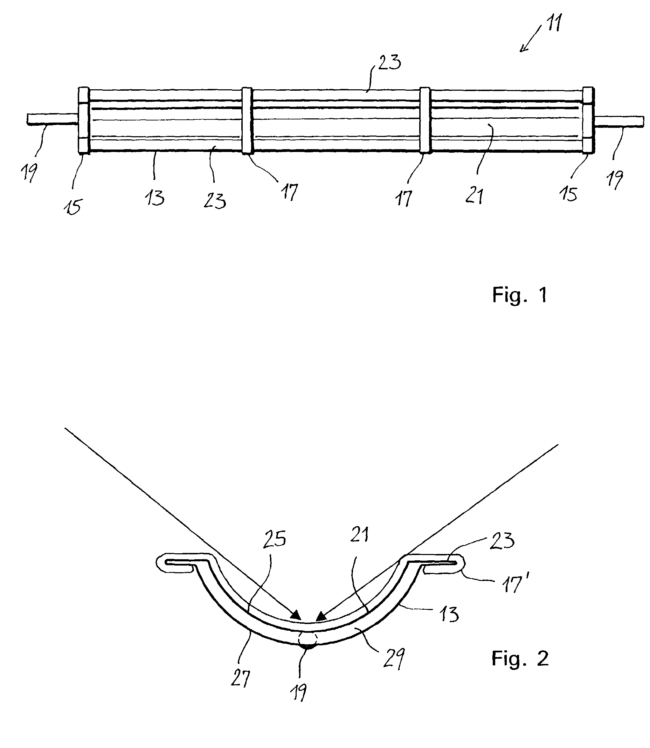

Das Sonnenkollektorelement 11 in Figur 1 ist aus einem rohrartigen Kollektorkörper 13, zwei Endstücken 15 und zwei Klammern 17 zusammengesetzt. In den Endstücken 15 ist je ein Anschlussrohr 19 zum Anschluss an eine Verteilleitung und eine Sammelleitung, bzw. an eine Vorlaufleitung und eine Rücklaufleitung angeordnet. Die Anschlussrohre 19 können auch direkt Vorlaufleitung und Rücklaufleitung sein, je nachdem, ob die Sonnenkollektorelemente 11 in Serie oder parallel angeordnet sind. Das Sonnenkollektorelement 11 ist in einem mittleren Hauptbereich 21 konvex gewölbt. Der an den Hauptbereich 21 anschliessende Rand 23 dient der Verstärkung des Elements 11.

Die Endstücke 15 sind Gussfittings, welche mit dem Kollektorkörper 13 verlötet sind. Sie verleihen dem aus dünnem Kupferblech gefertigten Kollektorkörper 13 Stabilität gegen eine Aufweitung der Wölbung des Hauptbereichs 21 durch einen überhöhten Innendruck. Ebenso wirken die beiden Klammern 17 zwischen den Enden des Elements 11. Die Klammern 17 sind um die Ränder 23 gelegt und lassen daher nicht zu, dass diese Ränder 23 auseinanderweichen. Dazu überspannen sie vorteilhaft die Wölbung des Hauptbereichs 21 wie eine Saite den Bogen.

Da aber überhöhter Innendruck, wie er z.B. beim Prüfen einer Anlage in der Höhe von 5 bar angewendet werden muss, das 0,6 mm dicke Kupferblech gegen die konkave Form aufzublähen vermöchte, folgen die Klammern 17' vorzugsweise wie in Figur 2 dargestellt, der Bogenlinie der Wölbung. Sodann halten beide, Klammern 17' und Endstücke 15, die Wölbung des Hauptbereichs 21 gegen den Innendruck zurück. Dadurch kann der rohrartige Kollektorkörper 13 auf seiner, der Sonne entgegen gewandten, konvexen Seite nicht aufgebläht werden. Damit sie die Ränder 23 dennoch genügend stark zusammenzuhalten vermögen, sind die Klammern 17' etwas kräftiger dimensioniert, als es für die Wölbung überspannende Klammern 17 notwendig ist.

Figur 2 zeigt weiter, dass die Form des Kollektorkörpers 13 durch zwei Schalen 25,27 gebildet ist, welche Teil des selben Rohres 13 sind und im Randbereich zusammenhängen. Ein Rohr mit Kreisquerschnitt kann derart gewalzt werden, dass die eine, etwas kleinere Hälfte konvex wird, während die andere etwas grössere Hälfte die ursprüngliche Form etwa beibehält. Dadurch entsteht ein Durchflussbereich 29 zwischen den Rohrwandungen der der Sonnenstrahlung zugewandten Vorderseite 25 und der Rückseite 27. Die Vorderseite oder Schale 25 ist die eigentliche Kollektorfläche. Der Querschnitt des Durchflussbereichs 29 und dadurch die Durchflussgeschwindigkeit des Wärmetransportmediums ist durch die Distanz zwischen den Schalen 25,27 bemessbar.

Die Wölbung der Schale 25 ermöglicht bei aufsteigend ausgerichteten Elementen in einem Teilbereich der Kollektorfläche 25 unabhängig von der Tageszeit einen steilen Einfallswinkel der Sonnenstrahlung auf die Kollektorfläche 25. Die in diesem Bereich auftretende Wärme im Kupferblech wird im Betrieb des Elements 11 umgehend und daher praktisch ohne Transportverlüste an das Wärmetransportmedium im Durchflussbereich 29 abgegeben. Die gesamte Kollektorfläche 25 steht rückseitig mit dem Wärmetransportmedum in Berührung.

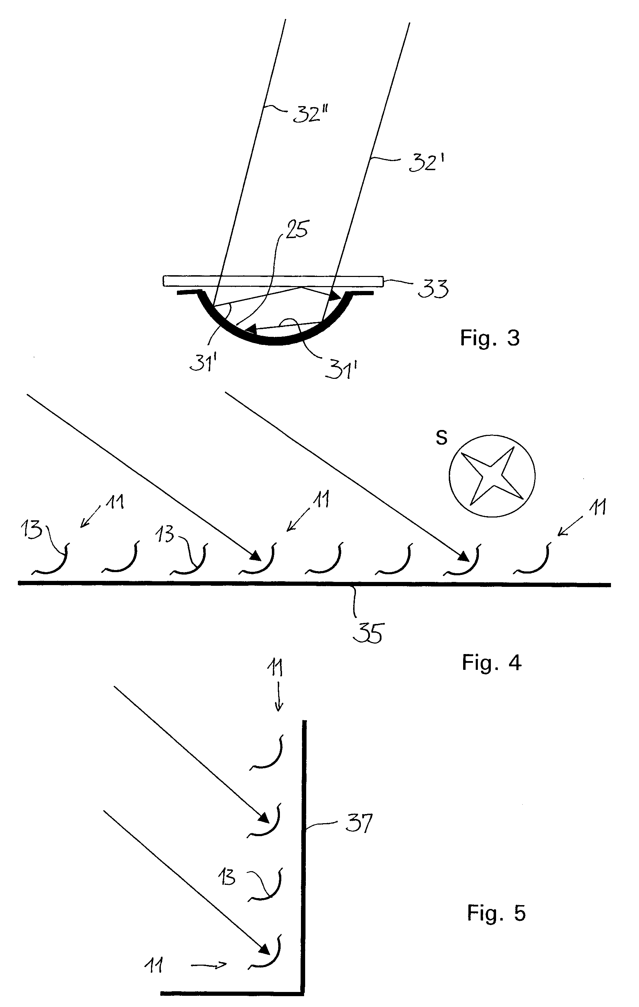

Figur 3 zeigt, dass allfällige Reflexionen 31' an der Kollektorfläche 25, insbesondere der in einem flachen Winkel auf die Kollektorfläche 25 einfallenden Strahlung 31, zu einem wesentlichen Teil direkt zu der benachbarten Kollektorfläche gespiegelt werden (Pfeil 32') oder in einem flachen Winkel zu einer Abdeckscheibe 33 weggehen und daher an dieser zu einem Grossteil total reflektiert werden (Pfeil 32''), und dass deshalb die Wärme auch aus diesen Reflexionen grösstenteils gewonnen wird.

Oft sind für Kollektoren verwendbare Flächen nicht in einer optimalen Himmelsrichtung gelegen und weisen keine optimale Neigung auf. Mit den erfindungsgemässen Elementen kann auf die Neigung oder die Himmelsrichtung reagiert werden. In den Figuren 4 und 5 sind die Möglichkeiten zur Korrektur der Ausrichtung der Montageflächen für die Sonnenkollektoren dargestellt.

Bei einer Ausrichtung einer Dachfläche 35 nach Südwest z.B., wie in Figur 4 schematisch dargestellt, kann die Sonnenkollektorfläche 13 nach Süden ausgerichtet werden, indem jedes einzelne Sonnenkollektorelement 11 ausgerichtet wird.

Ebenso kann, wie in Figur 5 dargestellt, eine senkrechte Wand 37 besser genutzt werden, wenn die horizontal ausgerichteten Sonnenkollektorelemente 11 nach einem mittleren Sonnenstand ausgerichtet werden. Dabei kann die Sonnenkollektorelemente 11 gemeinsam oder einzeln in einem wärmedämmenden Gehäuse untergebracht sein.

Durch die schmale, lange Form des Sonnenkollektorelements 11 ist dieses auch als Dekorelement oder sonstiges architektonisches Element verwendbar. Es kann als Fensterumrandung, als Gliederungselement in einer Fassade, z.B. abwechselnd mit Verkleidungseiementen etc. verwendet werden. Auch die Aufreihung von Elementen 11 in einer Brüstung oder an einer Gartenmauer ist denkbar. Die einzelnen Elemente 11 lassen sich einzeln ausrichten, so dass sie ohne Nachteil auf gewölbten Untergründen oder entlang geschwungenen Linien angeordnet werden können.

Zusammenfassend kann gesagt werden, dass ein von einem Wärmetransportmedium durchströmbares Sonnenkollektorelement (11) die Form eines rinnenfömigen Kissenkollektors aufweist, wobei die konkave Seite 25 des Kollektorkörpers 13 der Strahlungsquelle zugewandt ist. Die konkave Kollektorfläche 25 wird vor Verformungen infolge eines gegenüber dem Umgebungsdruck höheren Innendrucks durch Klammern 17 in Form gehalten. Die Enden sind mit einem Endstück 15, welches den Übergang zu Anschlussleitungen 19 bildet, verschlossen. Das Element kann einzeln oder in Gruppen mit einer isolierenden Hülle umschlossen sein. Bei einem Bausatz sind die Anschlussleitungen 19 mit Vorlauf bzw. Rücklauf mittels Schnell-Kupplungsstücken verbindbar, so dass das Montieren und Demontieren sehr rasch möglich ist. Der Bausatz kann daher bei mobilen Einrichtungen verwendet werden. Durch die schlanke Form der Sonnenkollektorelemente und ihre fast beliebige Kombinierbarkeit können sie auch als architektonische Gestaltungselemente Verwendung finden.

## Patentansprüche

1. Von einem Wärmetransportmedium durchfliessbares Sonnenkollektorelement (11) mit einem Kollektorkörper (13) einer bestimmbaren Länge und Breite, mit einer aussenseitigen Kollektorfläche (25) zum Auffangen von Wärmeenergie aus der Sonnenstrahlung und einer Innenseite der Kollektorfläche (25) zum praktisch vollflächigen Übertragen der aus der Sonnenstrahlung gewonnenen Wärmeenergie an das Wärmetransportmedium, und zum Anschliessen an eine Vorlaufleitung und eine Rücklaufleitung, und zum Einbau in eine einstrahlungsseitig für Sonnenstrahlung durchlässige, isolierende Hülle, gekennzeichnet durch eine in einer Richtung gewölbte Kollektorfläche (25), wobei die Wölbung der Kollektorfläche (25) aussenseitigen konkav ist.

2. Sonnenkollektorelement nach Anspruch 1, dadurch gekennzeichnet, dass in Durchflussrichtung die Kollektorfläche (25) eine wesentlich grössere Abmessung aufweist als quer dazu, und dass die Wölbung quer zur Durchflussrichtung ausgebildet ist, so dass die Kollektorfläche (25) eine rinnenartige Form aufweist.

3. Sonnenkollektorelement nach Anspruch 1 oder 2, dadurch gekennzeichnet, dass der Kollektorkörper (13) aus einem Rohr geformt ist und die Wandung (25,27) des Rohrs entlang zwei parallelen, geraden Linien gefalzt ist und in der Wandung zwischen den zwei Falzungen zwei etwa parallele Wölbungen ausgeformt sind.

4. Sonnenkollektorelement nach Anspruch 3, gekennzeichnet durch einen verstärkenden, abgekanteten Rand (23) entlang der geradlinigen Falzungen.

5. Sonnenkollektorelement nach einem der Ansprüche 1 bis 4, gekennzeichnet durch Verstärkungselemente (17,17'), welche in bestimmbaren Abständen angeordnet sind und die Ränder (23) der konvex gewölbten Kollektorfläche (25) zusammenbinden.

6. Sonnenkollektorelement nach einem der Ansprüche 1 bis 5, gekennzeichnet durch Verstärkungselemente (17'), welche in bestimmbaren Abständen angeordnet sind und die konvexe Wölbung der Kollektorfläche (25) gegen einen erhöhten Innendruck eines das Sonnenkollektorelement (11) füllenden Mediums stützen.

7. Sonnenkollektorelement nach einem der Ansprüche 1 bis 6, dadurch gekennzeichnet, dass die in Durchflussrichtung vorliegenden Enden des Kollektorkörpers (13) mit Endstücken (15) verschlossen sind, welche je wenigstens einen Rohranschluss aufweisen.

8. Verwendung von mehreren Sonnenkollektorelementen (11) nach einem der Ansprüche 1 bis 7 zur Bildung von eines Sonnenkollektors mit horizontal oder steigend verlaufenden, nach der Hauptsonnenscheinrichtung ausgerichteten Kollektorflächen (25).

9. Verwendung von Sonnenkollektorelementen (11) nach einem der Ansprüche 1 bis 7 als architektonische Gestaltungselemente in einer Fassade oder einer gestalteten Umgebung.

10. Bausatz mit Sonnenkollektorelementen (11) nach einem der Ansprüche 1 bis 7, gekennzeichnet durch je eine Vorlaufleitung und Rücklaufleitung und dadurch, dass die Sonnenkollektorelemente (11) wie auch die Vorlaufleitung und die Rücklaufleitung zum wiederholten raschen Zusammenbau bzw. zur wiederholten raschen Demontage mit einander entsprechenden Anschlusselementen versehen sind.
